(19) Europäisches Patentamt
European Patent Office
Office européen des brevets

(11) EP 3 792 649 A1

(12) EUROPEAN PATENT APPLICATION

(43) Date of publication:
17.03.2021 Bulletin 2021/11

(51) Int Cl.:
G01S 5/00 (2006.01)    G01S 5/16 (2006.01)
G01S 11/12 (2006.01)

(21) Application number: 20192822.3

(22) Date of filing: 26.08.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.09.2019 TR 201913680

(71) Applicants:
• Ford Otomotiv Sanayi Anonim Sirketi
Istanbul (TR)

• KOC University
34450 Istanbul (TR)

(72) Inventors:
• Soner, Burak
34730 stanbul (TR)
• Çöleri, Sinem
34450 stanbul (TR)

(74) Representative: Dericioglu, E. Korhan
Ankara Patent Bureau
Kavaklidere Mahallesi Bestekar Caddesi No: 10
06680 Cankaya, Ankara (TR)

(54) **A METHOD AND A SYSTEM FOR DETERMINING RELATIVE POSITIONS OF VEHICLES MOVING RELATIVE TO EACH OTHER**

(57) The system for detecting relative position of a first moving vehicle (A) with respect to a second moving vehicle (B) comprises: a first and second sensor determining first and second heading information (1) of the first vehicle (A) and second vehicle (B); a third and fourth sensor detecting instantaneous speed information of the first vehicle (A) and second vehicle (B); a first control unit for emitting the first heading information (1) and the speed information of the first vehicle (A) as a signal by headlights of the first vehicle (A); a receiver (B1) detecting the signal, and angle of arrival of the light at two instants; and a second control unit which uses the gathered data to calculate relative direction information, the relative distance information (3), and the relative position information of the first vehicle (A) with respect to the second vehicle (B).

Figure – 2

Printed by Jouve, 75001 PARIS (FR)

**Description**

**Technical Field**

The present invention relates to a method and a system for calculating a relative position of a vehicle with respect to another vehicle which are moving relative to each other.

**Background of the Invention**

It is crucial for vehicles in traffic to travel without posing any risk of accident in terms of safety of life and property. The fact that control of the vehicle is dependent on manpower and that manpower is prone to mistakes significantly increases the risk of accidents. Therefore, efforts are widely made in automotive industry to minimize loss of life in the event of an accident.

Though it is very important to minimize loss of life and property in the event of an accident, pre-estimation of a possible accident and taking measures before the accident is much more important. The current state-of-the-art includes various applications related to this issue, wherein said applications are primarily based on the technique of detecting positions of the vehicle at certain discrete time instants to estimate the approximate path of the vehicle. However, to enable efficient collision avoidance systems, relative vehicle position needs to be measured at centimeter-level accuracy and at a rate higher than 50 Hz. Moreover, as specified in automotive safety standards such as ISO26262 and SOTIF, said systems are required to be reliable and functional even under severe environmental conditions. Further, in said applications, the relative position of a moving vehicle with respect to a fixed reference, whose position is already known, is commonly calculated to make estimation accordingly. This technique remains incapable of detecting a relative distance between especially at least two vehicles that are moving relative to each other.

A large variety of applications are included in prior art for detecting position of a vehicle and such applications can be basically divided into two: Sensor-based and communication-based applications. Using sensor-based methods may be insufficient in terms of taking measurements with centimeter-level accuracy, and at a rate higher than 50 Hz, and sensors with such competency may have prohibitive costs. For example, GPS-based positioning is one such sensor-based solution, but it cannot function under adverse conditions (e.g., under unfavorable weather conditions or while driving through a tunnel) in which a GPS signal is failed to be received, and affects reliability in a negative manner.

Visible light communication is an example for communication-based positioning methods where modulated light emitted by LED headlights of vehicles can be utilized for positioning at centimeter-level accuracy and at rates higher than 50 Hz, with low cost. Therefore, visible light communication can complement sensor solutions which remain incapable in of satisfying the performance requirements of the automotive industry while ensuring low cost and reliability under variable and harsh road conditions. Methods using visible light communication technology for positioning mainly use the time-difference-of-arrival of modulated signals from the vehicle LED headlights, the phase-difference-of-arrival of the signals, the message roundtrip-time-of-flight and phase difference methods and camera based methods in order to eliminate the receiver-transmitter synchronization problem between two vehicles while determining a position of one moving vehicle relative to another. However, the main problem for such applications is that the position information cannot be provided accurately (at cm-level accuracy) or reliably at low costs in a sufficiently high rate (> 50 Hz), or they impose highly restrictive requirements while doing so.

**Brief Description of the Invention**

The system according to the present invention, suitable for use in detecting a relative position of a first vehicle moving on a first route with respect to a second vehicle moving on a second route comprises:

- at least a first sensor determining a first heading (direction) information of the first vehicle;
- at least a second sensor determining a second heading (direction) information of the second vehicle;
- at least a third sensor detecting instantaneous speed information of the first vehicle;
- at least a fourth sensor detecting instantaneous speed information of the second vehicle;
- at least a first control unit for emitting the determined first heading (direction) information and the detected speed information of the first vehicle as a signal by headlights of the first vehicle using visible light communication technology for a period between a first time instant and a second time instant;
- a single receiver detecting the light and an angle of arrival of the light at the first time instant and the second time instant, wherein the light has the signal containing the first heading (direction) information and the detected speed information of the first vehicle and emitted by the headlights of the first vehicle for a period between the first time instant and the second time instant; and
- at least a second control unit which is in communication with the receiver and uses the determined first heading (direction) information and the detected speed information of the first vehicle in said signal contained in the light detected by the receiver for said period, two different angle of arrival information of the light detected at the first time instant and the second time instant, and the determined second heading (direction) information and the detected speed information of the second vehicle, so as to calculate a relative distance and direction information of the first vehicle with respect to the second vehicle between the first time instant and the second time instant, and to calculate a relative position information of the first vehicle with respect to the second vehicle based on this relative distance and direction information.

The method according to the present invention comprises the steps of:

- determining the first heading (direction) information and instantaneous speed of the first vehicle;
- determining the second heading (direction) information and instantaneous speed of the second vehicle and transmitting it to the second control unit provided in the second vehicle;
- transmitting a signal containing the determined first heading (direction) information and instantaneous speed information of the first vehicle to the second vehicle by using headlights of the first vehicle by means of the visible light communication technology for a period, starting from the first time instant, between the first time instant and a second time instant after the first time instant;
- detecting, by the receiver of the second vehicle, the light containing said signal and a first angle of arrival of this light measured at the first time instant, and transmitting it to the second control unit provided in the second vehicle;
- detecting, at the second time instant, a second angle of arrival of the light containing said signal by means of the receiver of the second vehicle, and transmitting it to the second control unit provided in the second vehicle;
- calculating, by the second control unit, the first and second distances traveled by the first vehicle and the second vehicle between the first time instant and the second time instant based on speed information for both vehicles;
- calculating, by the second control unit, relative direction angle of the first vehicle with respect to the second vehicle based on heading (direction) information for both vehicles and distance information calculated for both vehicles;
- calculating, by the second control unit, a relative distance information of the first vehicle with respect to the second vehicle traveled by the first vehicle between the first time and the second time based on heading (direction) information and speed information for both vehicles;
- calculating first and second relative positions of the first vehicle with respect to the second vehicle at the first and second time instants by using calculated relative direction angle information, calculated relative distance information and the first angle of arrival and the second angle of arrival.

Thanks to the system and method according to the present invention, a relative position of one of at least two vehicles with respect to the other, which are moving relative to each other, can be calculated through a single receiver at centimeter-level accuracy, and at a rate higher than 50 Hz. Due to the fact that the system and method according to the present invention do not require use of any sensors that can be affected by adverse environmental conditions, relative position information can be calculated under all kinds of environmental conditions, thus achieving a relative position calculating system and method that can be used in especially collision avoidance systems in a reliable manner.

**Object of the Invention**

An object of the present invention is to provide a method and a system for detecting a relative position of one of at least two vehicles with respect to the other, which are moving relative to each other.
Another object of the present invention is to provide a method and a system for avoiding a possible collision by detecting a relative position of one of at least two vehicles with respect to the other, which are moving relative to each other.
A further object of the present invention is to provide a method and a system which enable measurements with centimeter-level accuracy, and at a rate higher than 50 Hz to be taken in order to detect a relative position of one of at least two vehicles with respect to the other, which are moving relative to each other.
Yet a further object of the present invention is to provide a reliable method and system which can function even under adverse conditions for detecting a relative position of one of at least two vehicles with respect to the other, which are moving relative to each other.

**Description of the Invention**

Exemplary embodiments of the system and method according to the present invention are illustrated in the attached drawings, in which:

Figure 1 is an exemplary view of the triangles used to calculate a position of a first vehicle at two time instants and a relative direction and relative distance traveled by the first vehicle with respect to the second vehicle, in the system and method according to the invention.

Figure 2 is an exemplary view of positioning triangles created between the first vehicle and the second vehicle for which the system and method according to the invention are used.

All the parts illustrated in figures are individually assigned a reference numeral and the corresponding terms of these numbers are listed below:

| First vehicle | (A) |
|---|---|
| Second vehicle | (B) |
| Receiver | (B1) |
| Relative direction angle | (a) |
| Horizontal coordinate of the first direction | (p1) |
| Horizontal coordinate of the second direction | (p2) |
| Longitudinal coordinate of the first direction | (p3) |
| Longitudinal coordinate of the second direction | (p4) |
| First heading information | (1) |
| Second heading information | (2) |
| Relative distance information | (3) |
| First angle of arrival | (4) |
| Second angle of arrival | (5) |
| First distance | (6) |
| Second distance | (7) |
| Difference of heading angles | (8) |

## Description of the Invention

In case of an accident between vehicles traveling in a traffic flow, it is very important to minimize the loss of life and property caused by this accident. However, avoiding said accident before it occurs is much more important in terms of eliminating loss of life and property in a possible accident. In this scope, various applications are provided for estimating a possible collision by detecting positions of vehicles. On the other hand, these applications may remain incapable of taking measurements with sufficient accuracy and rate or they may be costly to measure with the required accuracy and rate. In addition, said applications may be insufficient to function under adverse conditions, and thus, they may not convenient for use in collision avoidance applications where reliability is crucial. Within this context, the present invention provides a method and a system for detecting a relative position of one of at least two vehicles with respect to the other, which are moving relative to each other, which is suitable for use in a collision avoidance application and allows said problems to be solved.

The system according to the present invention, suitable for use in detecting a relative position of a first vehicle (A) moving on a first route with respect to a second vehicle (B) moving on a second route (the second route may be the same as the first route or different from the first route) comprises: at least a first sensor suitable for being located at the first vehicle (A) and determining a first heading information (1) of the first vehicle (A) (the first heading information (1) [i.e. direction information] indicates which direction angle the vehicle is facing in the north-south/east-west plane; in other words, for example when, say, the vehicle is moving 41° northeast and if a hypothetical line is drawn to the north pole from the location of the vehicle, it indicates the angle of the vehicle's direction with this line); at least a second sensor suitable for being located at the second vehicle (B) and determining a second heading information (2) of the second vehicle (B) (the second heading information [i.e. direction information] indicates which direction angle the vehicle is facing in the north-south/east-west plane; in other words, for example when, say, the vehicle is moving 41 ° northeast and if a hypothetical line is drawn to the north pole from the location of the vehicle, it indicates the angle of the vehicle's direction with this line); at least a third sensor suitable for being located at the first vehicle (A) and detecting instantaneous speed information of the first vehicle (A); at least a fourth sensor suitable for being located at the second vehicle (B) and detecting instantaneous speed information of the second vehicle (B); at least a first control unit suitable for being located at the first vehicle (A) for emitting the determined first heading information (1) and the detected speed information of the first vehicle (A) as a signal by headlights of the first vehicle (A) using visible light communication technology for a period between a first time instant and a second time instant; a single receiver (B1) suitable for being located at the second vehicle (B) and detecting the light and an angle of arrival of the light at the first time instant and the second time instant, wherein the light has the signal containing the first heading information (1) and the detected speed information of the first vehicle (A) and is emitted by the headlights of the first vehicle (A) for a period between the first time instant and the second time instant; and at least a second control unit suitable for being located at the second vehicle (B), in communication with the receiver (B1), and using the determined first heading information (1) and the detected speed information of the first vehicle (A) in said signal contained in the light detected by the receiver (B1) for said period, two different angle of arrival information of the light detected at the first time instant and the second time instant, and the second heading information (2) preferably determined at the first time instant and the detected speed information of the second vehicle (B), so as to calculate a relative distance information (3) and relative heading (direction) information of the first vehicle (A) with respect to the second vehicle (B) between the first time instant and the second time instant, and to calculate a relative position information of the first vehicle (A) with respect to the second vehicle (B) based on this relative distance information (3) and relative heading (direction) information.

In a preferred embodiment of the invention, the receiver (B1) comprises at least one 4-quadrants photodiode and at least one hemispherical lens covering this photodiode. Therefore, angle of arrival of the light can be easily and practically detected depending on intensity of the light reaching different quadrants of the photodiode.

The method according to the present invention for detecting a relative position of a first vehicle (A) moving on a first route with respect to a second vehicle (B) moving on a second route (the second route may be the same as the first route or different from the first route) comprises the steps of: determining the first heading information (1) and instantaneous speed of the first vehicle (A) preferably at a first time instant (e.g. at a "k" instant) (the first heading information (1) and instantaneous speed of the first vehicle (A) may be determined at the first time instant and/or a time instant before the first time instant, and they are assumed to remain unchanged until a second time instant after the first time instant); determining the second heading information (2) and instantaneous speed of the second vehicle (B) preferably at the first time instant (the second heading information (2) and the instantaneous speed of the second vehicle (B) may be determined at the first time instant and/or a time instant before the first time instant) and transmitting it to the second control unit provided in the second vehicle (B); transmitting a signal containing the determined first heading information (1) and instantaneous speed information of the first vehicle (A) to the second vehicle (B) by using headlights of the first vehicle (A) by means of the visible light communication technology for a period, starting from the first time instant, between the first time instant and a second time instant after the first time instant; detecting, by the receiver (B1) of the second vehicle (B), the light containing said signal and the first angle of arrival (4) of this light measured at the first time instant, and transmitting it to the second control unit provided in the second vehicle (B); detecting, at the second time instant (e.g. at a "k+1" instant), a second angle of arrival (5) of the light containing said signal by means of the receiver (B1) of the second vehicle (B), and transmitting it to the second control unit provided in the second vehicle (B); calculating, by the second control unit, the distances traveled by the first vehicle (A) and the second vehicle (B) between the first time instant and the second time instant (i.e. the first distance (6) traveled by the first vehicle (A) and the second distance (7) traveled by the second vehicle (B) between the first time instant and the second time instant) based on speed information for both vehicles; calculating, by the second control unit, relative direction angle (a) of the first vehicle (A) with respect to the second vehicle (B) (i.e. a relative heading (direction) information of the first vehicle (A) with respect to the second vehicle (B) / a direction angle of the first vehicle (A) with respect to the second vehicle (B)) based on heading (direction) information for both vehicles (i.e. based on the first heading information (1) and the second heading information (2)) and distance information calculated for both vehicles (i.e. based on the first distance (6) and the second distance (7) information); calculating, by the second control unit, a relative distance information (3) of the first vehicle (A) with respect to the second vehicle (B) traveled by the first vehicle (A) between the first time and the second time based on heading (direction) information and speed information for both vehicles; and calculating first and second relative positions of the first vehicle (A) with respect to the second vehicle (B) at the first and second time instants by using calculated relative direction angle (a) information, calculated relative distance information (3) and the first angle of arrival (4) and the second angle of arrival (5).

In an exemplary embodiment of the invention, the first vehicle (A) transmits to the second vehicle (B) a signal, which has a message containing the first heading information (1) and the instantaneous speed of the first vehicle (A), starting from the first time instant until the second time instant by means of the light emitted by the headlights thereof; and the signal having said message is detected by the receiver of second vehicle (B) and transmitted to the second control unit. Here, the first heading information (1) and/or instantaneous speed of the first vehicle (A) may be measured at said first time instant or at a time before the first time instant; however, in the embodiment of the invention, it is assumed that the first heading information (1) and/or the instantaneous speed of the first vehicle (A) measured does not change until the second time instant. By means of the receiver, the second vehicle (B) measures first angle of arrival (4) at the first time instant and second angle of arrival (5) at the second time instant of the light emitted by headlights of the first vehicle (A), and transmits it to the second control unit. For the angle of arrival measurements, the wave generated while transmitting the signal is used, not the message content of the signal. Within this process, preferably at the first time instant, second heading information (2) and instantaneous speed of the second vehicle (B) is also measured and transmitted to the second control unit. Second heading information (2) and instantaneous speed of the second vehicle (B) may be measured at said first time instant or at a time before the first time instant. By means of the second control unit, the second vehicle (B) uses the first heading information (1), the second heading information (2), the instantaneous speed of the first vehicle (A), the instantaneous speed of the second vehicle (B), the first angle of arrival (4) at the first time instant and the second angle of arrival (5) at the second time instant so as to calculate a relative position of the first vehicle (A) with respect to the second vehicle (B). In the system and method according to the invention, it is possible to determine the position without being affected by the environmental conditions by using heading (direction) information for both vehicles. Moreover, the need for using multiple receivers is eliminated by measuring two angles of arrival separately with a single receiver. Thus, a system and method can be achieved which is both low-cost and can function precisely in adverse environmental conditions.

In a preferred embodiment of the method according to the invention, the step of calculating a relative direction angle (a) between the first vehicle (A) and the second vehicle (B) comprises the sub-steps of: multiplying individually the detected speed information of the first vehicle (A) and the detected speed information of the second vehicle (B) with the difference between the first time and the second time, thus obtaining the first distance (6) and the second distance (7); calculating the difference of heading angles (8) between the first heading information (1) and the second heading information (2); and obtaining said relative direction angle (a) by a first equation using the first distance (6), the second distance (7) and the difference of heading angles (8). Such an equation is preferably as follows:

$$\alpha = 90° - atan\left(\frac{d_{TX/TX}\left(sin(\tau)\right) - d_{RX/RX}}{d_{TX/TX}\left(cos(\tau)\right)}\right)$$

wherein, "$d_{TX/TX}$" is the first distance (6), "$d_{RX/RX}$" is the second distance (7), and "$\alpha$" is the relative direction angle (a). "$\tau$" is calculated by a second equation as given below:

$$\tau = 90° - \zeta$$

wherein "$\zeta$" represents the difference of heading angles (8).

The relative distance information (3) is preferably calculated by a third equation as given below:

$$d_{TX/RX} = \sqrt{\left(d_{TX/TX}\left(cos(\tau)\right)\right)^2 + \left(d_{TX/TX}\left(sin(\tau)\right) - d_{RX/RX}\right)^2}$$

wherein, "$d_{TX/RX}$" is the relative distance information (3).

Calculation of the relative position of the first vehicle (A) with respect to the second vehicle (B) at the first time and the second time according to the X and Y coordinate plane is preferably performed by the following equations:

$$x_k = d_{TX/RX}\left(\frac{c_\alpha - \beta s_\alpha}{\beta - \gamma}\right); \quad y_k = \gamma(x_k)$$

$$x_{k+1} = s_\alpha(d_{TX/RX}) + x_k; \quad y_{k+1} = \beta(x_{k+1})$$

wherein, "$x_k$" represents "x" or "horizontal" component of relative position information of the first vehicle (A) at the first time (abscissa (p1) of the first position of the first vehicle at the first time instant), "$y_k$" represents "y" or "longitudinal" component of relative position information of the first vehicle (A) at the first time (longitudinal coordinate (p3) of the first position of the first vehicle at the first time instant), "$x_{K+1}$" represents "x" or "horizontal" component of relative position information of the first vehicle (A) at the second time (abscissa (p2) of the second position of the first vehicle at the second time instant), and "$y_{K+1}$" represents "y" or "longitudinal" component of relative position information of the first vehicle (A) at the second time (longitudinal coordinate (p4) of the second position of the first vehicle at the second time instant).

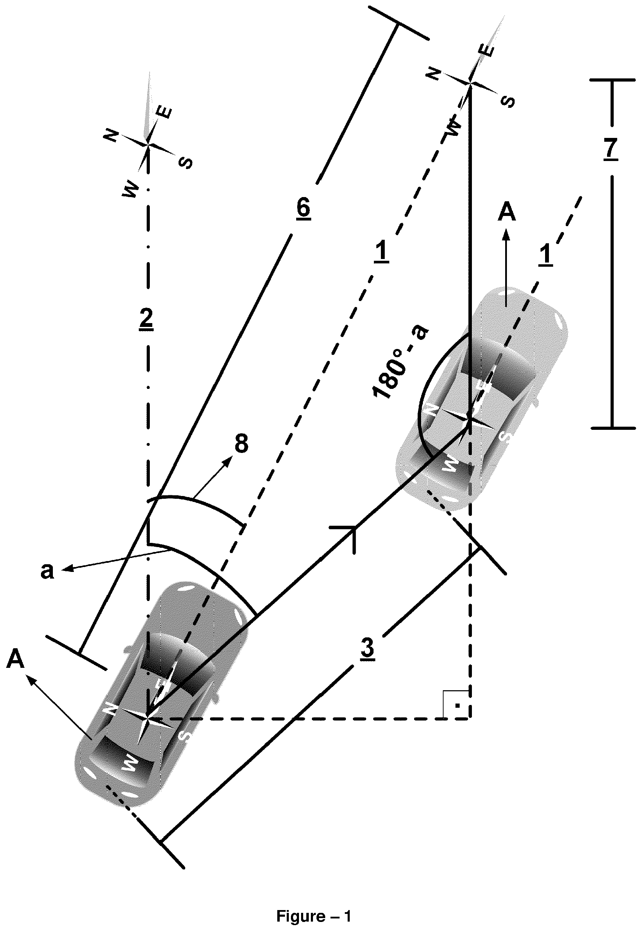

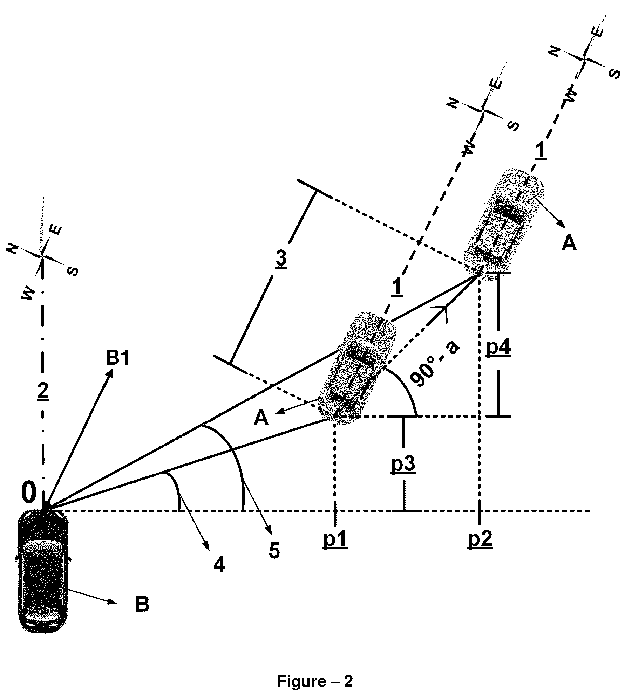

The "$c\alpha$", "$\beta$", "$s\alpha$" and "$\gamma$" provided in said equations are calculated according to the following equations created by using the positioning triangles in exemplary embodiments shown in figure 1 and figure 2:

$$s_\alpha = \sin(\alpha), \; c_\alpha = \cos(\alpha), \; \gamma = \tan(\theta_k), \; \beta = \tan(\theta_{k+1})$$

wherein, "$\theta_k$" represents the first angle of arrival (4), and "$\theta_{k+1}$" represents the second angle of arrival (5).

The above given equations that allow the relative position of the first vehicle (A) with respect to the second vehicle (B) to be calculated at the first time and the second time according to the X and Y coordinate plane are obtained by solving the following equations created by using positioning triangles in the exemplary embodiments shown in figure 1 and figure 2:

$$\gamma = \frac{y_k}{x_k} \; , \quad \beta = \frac{y_{k+1}}{x_{k+1}}$$

$$x_{k+1} - x_k = s_\alpha(d_{TX/RX}) \; , \quad y_{k+1} - y_k = c_\alpha(d_{TX/RX})$$

In a preferred embodiment of the invention, the system according to the invention also comprises at least another receiver (B1) which is located adjacent to the receiver (B1) in the second vehicle (B), wherein in the method according to this embodiment, angle of arrival detected by a receiver (B1) is used as the first angle of arrival (4) and angle of arrival detected by the other receiver (B1) is used as the second angle of arrival (5), and positioning triangles that will be created to calculate position are determined according to these angles of arrival. Therefore, in addition to a relative position information calculated by using a single receiver (B1), another relative position information is calculated by using at least two receivers (B1) such that both of the calculated relative position information are combined to obtain a final relative position information. Thus, the system and the method according to the invention can be enabled to give much more precise and much more reliable results.

Thanks to the system and method according to the present invention, a relative position of one of at least two vehicles with respect to the other, which are moving relative to each other, can be calculated through a single receiver (B1) by taking measurements with centimeter-level accuracy, and at a rate higher than 50 Hz. Due to the fact that the system and method according to the present invention do not require use of any sensors that can be affected by adverse environmental conditions, relative position information can be calculated under all kinds of environmental conditions, thus achieving a relative position calculating system and method that can be used in especially collision avoidance systems in a reliable manner.

**Claims**

1. A system suitable for use in detecting a relative position of a first vehicle (A) moving on a first route with respect to a second vehicle (B) moving on a second route, **characterized by** comprising:

   - at least a first sensor determining a first heading information (1) of the first vehicle (A);
   - at least a second sensor determining a second heading information (2) of the second vehicle (B);
   - at least a third sensor detecting instantaneous speed information of the first vehicle (A);
   - at least a fourth sensor detecting instantaneous speed information of the second vehicle (B);
   - at least a first control unit for emitting the determined first heading information (1) and the detected speed information of the first vehicle (A) as a signal by headlights of the first vehicle (A) using visible light communication technology for a period between a first time instant and a second time instant;
   - a single receiver (B1) detecting the light and an angle of arrival of the light at the first time instant and the second time instant, wherein the light has the signal containing the first heading information (1) and the detected speed information of the first vehicle (A) and emitted by the headlights of the first vehicle (A) for a period between the first time instant and the second time instant; and
   - at least a second control unit which is in communication with the receiver (B1) and uses the determined first heading information (1) and the detected speed information of the first vehicle (A) in said signal contained in the light detected by the receiver (B1) for said period, two different angle of arrival information of the light detected at the first time instant and the second time instant, and the determined second heading information (2) and the detected speed information of the second vehicle (B), so as to calculate a relative distance information (3) and relative direction information of the first vehicle (A) with respect to the second vehicle (B) between the first time instant and the second time instant, and to calculate a relative position information of the first vehicle (A) with respect to the second vehicle (B) based on this relative distance information (3) and relative direction information.

2. A system according to claim 1, **characterized in that** the receiver (B1) comprises at least one 4-quadrants photodiode and at least one hemispherical lens covering this photodiode.

3. A method for detecting a relative position of a first vehicle (A) with respect to a second vehicle (B) by a system according to any of the preceding claims, **characterized by** comprising the steps of:

- determining the first heading information (1) and instantaneous speed of the first vehicle (A);
- determining the second heading information (2) and instantaneous speed of the second vehicle (B) and transmitting it to the second control unit provided in the second vehicle (B);
- transmitting a first signal containing the determined first heading information (1) and instantaneous speed information of the first vehicle (A) to the second vehicle (B) by using headlights of the first vehicle (A) by means of the visible light communication technology for a period, starting from the first time instant, between the first time instant and a second time instant after the first time instant;
- detecting, by the receiver (B1) of the second vehicle (B), the light containing said signal and a first angle of arrival (4) of this light measured at the first time instant, and transmitting it to the second control unit provided in the second vehicle (B);
- detecting, at the second time instant, a second angle of arrival (5) of the light containing said signal by means of the receiver (B1) of the second vehicle (B), and transmitting it to the second control unit provided in the second vehicle (B);
- calculating, by the second control unit, the distances traveled by the first vehicle (A) and the second vehicle (B) between the first time instant and the second time instant based on speed information for both vehicles;
- calculating, by the second control unit, relative direction angle (a) of the first vehicle (A) with respect to the second vehicle (B) based on heading information for both vehicles and distance information calculated for both vehicles;
- calculating, by the second control unit, a relative distance information (3) of the first vehicle (A) with respect to the second vehicle (B) traveled by the first vehicle (A) between the first time and the second time based on heading and speed information for both vehicles; and
- calculating first and second relative positions of the first vehicle (A) with respect to the second vehicle (B) at the first and second time instants by using calculated relative direction angle information (a), calculated relative distance information (3) and the first angle of arrival (4) and the second angle of arrival (5).

4. A method according to claim 3, **characterized in that** the step of calculating a relative direction angle (a) between the first vehicle (A) and the second vehicle (B) comprises the sub-steps of: multiplying individually the detected speed information of the first vehicle (A) and the detected speed information of the second vehicle (B) with the difference between the first time and the second time, thus obtaining the first distance (6) and the second distance (7); calculating the difference of heading angles (8) between the first heading information (1) and the second heading information (2); and obtaining said relative direction angle (a) by a first equation using the first distance (6), the second distance (7) and the difference of heading angles (8).

5. A method according to claim 4, **characterized in that** the first equation is the following equation:

$$\alpha = 90° - atan\left(\frac{d_{TX/TX}\left(sin(\tau)\right) - d_{RX/RX}}{d_{TX/TX}\left(cos(\tau)\right)}\right)$$

wherein, "$d_{TX/TX}$" is the first distance (6), "$d_{RX/RX}$" is the second distance (7), and "$\alpha$" is the relative direction angle (a); and "$\tau$" is calculated by a second equation as given below:

$$\tau = 90° - \zeta$$

wherein "$\zeta$" represents the difference of heading angles (8).

6. A method according to claim 5, **characterized in that** the relative distance information (3) is preferably calculated by a third equation as given below:

$$d_{TX/RX} = \sqrt{\left(d_{TX/TX}\left(\cos(\tau)\right)\right)^2 + \left(d_{TX/TX}\left(\sin(\tau)\right) - d_{RX/RX}\right)^2}$$

wherein, "$d_{TX/RX}$" is the relative distance information (3).

**7.** A method according to claim 6, **characterized in that** calculation of the relative position of the first vehicle (A) with respect to the second vehicle (B) at the first time and the second time according to the X and Y coordinate plane is performed by the following equations:

$$x_k = d_{TX/RX}\left(\frac{c_\alpha - \beta s_\alpha}{\beta - \gamma}\right); \quad y_k = \gamma(x_k)$$

$$x_{k+1} = s_\alpha(d_{TX/RX}) + x_k; \quad y_{k+1} = \beta(x_{k+1})$$

wherein, "$x_k$" represents horizontal component of relative position information of the first vehicle (A) at the first time, "$y_k$" represents longitudinal component of relative position information of the first vehicle (A) at the first time, "$x_{K+1}$" represents horizontal component of relative position information of the first vehicle (A) at the second time, and "$y_{K+1}$" represents longitudinal component of relative position information of the first vehicle (A) at the second time.

**8.** A method according to claim 7, **characterized in that** "$c\alpha$", "$\beta$", "$s\alpha$" and "$\gamma$" are calculated according to the following equations:

$$s_\alpha = \sin(\alpha), \quad c_\alpha = \cos(\alpha), \quad \gamma = \tan(\theta_k), \quad \beta = \tan(\theta_{k+1})$$

wherein, "$\theta_k$" represents the first angle of arrival (4), and "$\theta_{k+1}$" represents the second angle of arrival (5).

**9.** A method according to claim 8, **characterized in that** the equations that allow the relative position of the first vehicle (A) with respect to the second vehicle (B) to be calculated at the first time and the second time according to the X and Y coordinate plane are obtained by solving the following equations:

$$\gamma = \frac{y_k}{x_k}, \quad \beta = \frac{y_{k+1}}{x_{k+1}}$$

$$x_{k+1} - x_k = s_\alpha(d_{TX/RX}), \quad y_{k+1} - y_k = c_\alpha(d_{TX/RX})$$

**10.** A method according to any of the preceding claims 3 to 9, **characterized in that** the first angle of arrival (4) is the angle of arrival detected by at least one receiver (B1), and the second angle of arrival (5) is the angle of arrival detected by at least another receiver (B1) located adjacent to said receiver (B1).

**11.** A system according to claim 1 or 2, **characterized by** comprising at least another receiver (B1) which is located adjacent to said receiver (B1).

**12.** A method according to any of the preceding claims 3 to 10, **characterized in that** the first heading information (1) of the first vehicle (A) is measured at the first time instant.

**13.** A method according to any of the preceding claims 3 to 10, **characterized in that** the first heading information (1) of the first vehicle (A) is measured at a time before the first time instant.

**14.** A method according to any of the preceding claims 3 to 10, **characterized in that** the second heading information (2) of the second vehicle (B) is measured at the first time instant.

**15.** A method according to any of the preceding claims 3 to 10, **characterized in that** the second heading information (2) of the second vehicle (B) is measured at a time before the first time instant.

Figure – 1

Figure – 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BURAK SONER ET AL: "Vehicular Visible Light Positioning with a Single Receiver", 2019 IEEE 30TH ANNUAL INTERNATIONAL SYMPOSIUM ON PERSONAL, INDOOR AND MOBILE RADIO COMMUNICATIONS (PIMRC), 9 September 2019 (2019-09-09), pages 1-6, XP055768655, DOI: 10.1109/PIMRC.2019.8904408 ISBN: 978-1-5386-8110-7 * the whole document * | 1-15 | INV. G01S5/00 G01S5/16 G01S11/12 |
| A | US 2014/025284 A1 (ROBERTS RICHARD D [US]) 23 January 2014 (2014-01-23) * the whole document * | 1-15 | |

TECHNICAL FIELDS
SEARCHED (IPC)

G01S
B60Q
G08G

The present search report has been drawn up for all claims

| Place of search | Date of completion of the search | Examiner |
|---|---|---|
| Munich | 26 January 2021 | Galmiche, Aurélien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 19 2822

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2021

| Patent document cited in search report | Publication date | Patent family member(s) | Publication date |
|---|---|---|---|
| US 2014025284 A1 | 23-01-2014 | CN 104169738 A | 26-11-2014 |
| | | EP 2841962 A1 | 04-03-2015 |
| | | JP 2015514202 A | 18-05-2015 |
| | | KR 20140131550 A | 13-11-2014 |
| | | US 2014025284 A1 | 23-01-2014 |
| | | WO 2013162559 A1 | 31-10-2013 |

EPO FORM P0459

For more details about this annex : see Official Journal of the European Patent Office, No. 12/82